# EUROPEAN PATENT SPECIFICATION

(11) **EP 3 398 672 B1**
(45) Date of publication and mention of the grant of the patent: **16.02.2022**
(21) Application number: 17000747.0
(22) Date of filing: 02.05.2017
(51) Int. Cl.: B01D 53/04, B60T 17/00

(54) **DRYING AGENT CARTRIDGE FOR AN AIR TREATMENT SYSTEM AS WELL AS AIR TREATMENT SYSTEM FOR A COMMERCIAL VEHICLE**
TROCKNUNGSMITTELKARTUSCHE FÜR EIN LUFTBEHANDLUNGSSYSTEM WIE EIN LUFTBEHANDLUNGSSYSTEM FÜR EIN NUTZFAHRZEUG
CARTOUCHE D'AGENT SICCATIF POUR UN SYSTÈME DE TRAITEMENT DE L'AIR AINSI QU'UN SYSTÈME DE TRAITEMENT DE L'AIR POUR UN VÉHICULE UTILITAIRE

(43) Date of publication of application: 07.11.2018
(73) Proprietor: ZF CV Systems Europe BV, 1170 Brussels (BE)
(72) Inventor: Baut, Mateusz, 52-129 Wroclaw (PL); Bodniewicz, Damian, 59-300 Lubin (PL); Friedrich, Marco, 30169 Hannover (DE); Lisztwan, Kamila, 50-239 Wroclaw (PL); Marcinkiewicz, Blazej, 52-129 Wroclaw (PL); Pawlowski, Karol, 37-700 Przemysl (PL)
(74) Representative: Copi, Joachim

(56) References cited:
- EP-A1- 0 608 606
- WO-A1-00/26074
- DE-A1-102013 103 066
- DE-A1-102015 112 488
- GB-A- 2 126 124
- US-A1- 2004 016 342

## Description

The invention relates to a drying agent cartridge for an air treatment system for a commercial vehicle according to the preamble of claim 1. Furthermore, the invention relates to an air treatment system for a commercial vehicle according to claim 14 comprising such a drying agent cartridge.

This drying agent cartridge is exchangeable and can be assembled in an air dryer of the air treatment system, wherein the drying agent cartridge is covered by a reusable cover, e.g. a metal cover, constituting an outer cartridge housing. Thus, upon expiration of the lifetime of such a drying agent cartridge the cover is dismounted, the drying agent cartridge is removed, a new drying agent cartridge is inserted and the same cover is mounted again, in order to cover, to protect, and to seal the drying agent cartridge.

This drying agent cartridge comprises a drying agent container containing drying agent, e.g. a desiccant constituted by desiccant beads. An upper housing is in contact with the upper end portion of the drying agent container and prevents the drying agent from escaping from the drying agent container. Thus, the upper housing constitutes a cap. Although the upper housing prevents desiccant beads from getting lost, the upper housing is permeable to air.

Furthermore, the drying agent cartridge comprises a lower housing that interfaces with the air treatment system and supports the drying agent container.

Furthermore, the drying agent cartridge comprises a spring pressing against the lower housing and generating a compression force on the drying agent. Thus, the desiccant beads inside the drying agent container are compressed in order to avoid beads getting cracked by vibrations.

Such drying agent cartridges are state of the art and e.g. disclosed in GB 2 126 124 A and US 2012/0312171 A1.

However, the drying agent container according to US 2012/0312171 A1 has a movable drying agent cap at the upper end portion of the drying agent container. In order to generate a compression force on the drying agent the spring generating the compression force needs to act on top of the movable cap. Thus, the spring abuts against the movable cap as well as against an upper portion of the lower housing which thus constitutes a drying agent cartridge housing which in turn is covered by the above-mentioned cover.

As a result the upper portion of the drying agent cartridge is constituted with a structure of high complexity a complex requiring a lot of space.

It is therefore an object of the present invention to reduce the complexity of this structure.

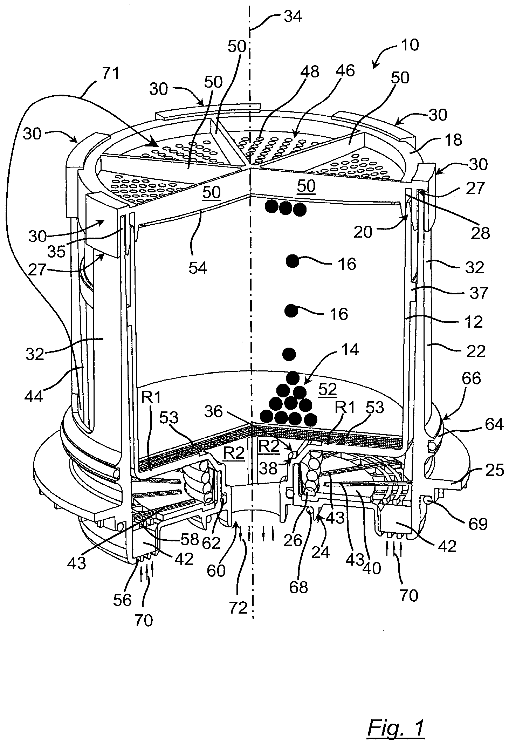

This object is achieved by providing a drying agent cartridge according to claim 1, i.e. an agent cartridge comprising the initially mentioned features, wherein the upper housing is permanently connected with said lower housing in a fixed position relative to each other and wherein the drying agent container is axially movable in relation to the upper housing and the lower housing and wherein the spring presses the lower housing and the drying agent container apart from each other. Thus, the upper housing remains in a predetermined and fixed position relative to the cover. Thus, the upper housing is not movable and thus the upper housing does not need a protection against the cover as it is needed in the prior art according to US 2012/0312171 A1, figure 1, due to the movability of the corresponding cap for the drying agent container.

As a result according to the present invention the complexity of the structure of the upper end portion of the drying agent cartridge is significantly reduced. Furthermore, space is saved rendering it possible to increase the volume of the drying agent within the drying agent container and/or to reduce the height of the drying agent cartridge and thus the required height of the cover for the drying agent cartridge. Thus, the space requirements for the air dryer and thus the air treatment system can be reduced and/or the drying capability of the air dryer can be increased and/or the lifetime of the drying agent cartridge can be increased as well.

Furthermore, the above mentioned object is achieved by an air treatment system for a commercial vehicle according to claim 14, comprising such a drying agent cartridge and a removable cover covering said drying agent cartridge. This cover is reusable and covers, secures, and protects the drying agent cartridge and enables airflow circulation through the drying agent.

Preferably, the drying agent container comprises an unopenable connection between the upper housing and the lower housing. Thus, a user cannot open the drying agent cartridge without destruction thereby enabling hazardous drying agent to escape in the environment.

Preferably, this unopenable connection is provided by ultrasonic welding, hot riveting, electromagnetic welding or chemical bonding. Thus, a durable connection is provided without the risk of failure of the connection.

The upper housing comprises sockets and the lower housing comprises arms, wherein the sockets are designed such in order to receive the arms. Hence, the sockets and the arms constitute part of the durable unopenable connection.

Preferably, the upper housing comprises a guiding feature, e.g. a chamfer, adapted to guide said drying agent container. Thus, the drying agent container remains in a predetermined radial position, thus, keeping the upper housing on and in contact with the drying agent container, even if the drying agent container moves axially. Hence, loss of drying agent out of the drying agent container is avoided.

Preferably, the drying agent container comprises a circumferential rib. This rib allows easy and proper connection of the drying agent container and the lower housing.

Preferably, the drying agent container comprises an end-stop element being able to abut against a counterpart element of the lower housing. Such an end-stop element prevents that the drying agent container clashes with the air treatment system.

Preferably, the drying agent container comprises a ring holder, preferably constituted as a ring holder, that is abutted by the spring against said lower housing and that keeps a ring filter, preferably a fleece ring filter, in a predetermined position.

Preferably, the lower housing comprises lateral openings or gaps. Thus, airflow passages are provided for airflow from the interior of the lower housing to the exterior of the lower housing in order to enable further airflow through the upper housing into the interior of the drying agent container thereby passing the drying agent.

Preferably, said upper housing comprises a mesh with mesh openings larger than the size of drying agent elements, wherein a fleece pad is located at the top end portion of the drying agent container. Thus, this fleece pad is arranged below and preferably adjacent to the upper housing. Hence, the fleece pad avoids loss of drying agent from the drying agent container.

Alternatively, the upper housing comprises a mesh with mesh openings that are smaller than the size of the drying agent elements, e.g. the desiccant beads. Thus, the mesh allows airflow but avoids loss of drying agent from the drying agent container without taking other measures in order to avoid such most.

Preferably, the upper housing comprises ribs providing rigidity to the mesh. Thus, the upper housing can be built with low weight and with low costs due to just a little need for material as the rigidity of the upper housing results from the ribs. Hence, the mesh can easily resist static forces resulting from the spring as well as dynamic forces resulting from vibrations of the vehicle and thus from accelerations of the internal components of the drying agent cartridge.

Preferably, the drying agent container comprises a fleece pad located at the bottom of the drying agent container. Thus, the drying agent within the drying agent container is secured against dropping out of the drying agent container at its bottom.

Preferably, the drying agent container comprises glass-fiber pads located at the bottom of the drying agent container and being secured by said fleece pad. The glass-fiber pads provide air cleaning function, particularly cleaning air from dust.

Preferably, the ring filter at the airflow entrance of said air drying cartridge is constituted as a foam filter. Thus, incoming air is cleaned from solid particles.

The above-mentioned effects and advantages of features and of combinations of a plurality of features are exemplary and may occur alternatively or cumulatively, however, without the effects and the advantages necessarily having to be achieved by embodiments according to the invention.

Further features can to be taken from the drawings, in particular the illustrated geometries and the relative dimensions of several components relative to one another, as well as their relative arrangement and operative connection. The combination of features of different embodiments of the invention or of features of different claims is also possible, even if deviating from the specific dependencies of the claims, and is hereby explicitly proposed. This also relates to features which are depicted in the drawing or are described in the description. These features may also be combined with features of other claims. Likewise, features disclosed in claims can be omitted in other embodiments of the invention.

Other objects, advantages and further developments of the present invention will become apparent from the following detailed description of a preferred embodiment when considered in conjunction with the accompanying drawing.

In the drawing:
- Fig. 1: shows a perspective sectional view of a drying agent cartridge according to a preferred embodiment of the present invention.

Figure 1 shows a drying agent cartridge 10 for an air treatment system (not shown) for a commercial vehicle.

The drying agent cartridge 10 comprises a drying agent container 12 constituted as a movable piston and containing the drying agent 14 preferably constituted by desiccant beads 16.

The drying agent cartridge 10 comprises an upper housing 18 which is in contact with the upper end portion 20 of the drying agent container 12 and prevents drying agent 14 form escaping from the drying agent container 12.

Furthermore, a lower housing 22 is provided for interfacing said drying agent cartridge 10 with the air treatment system (not shown) with lower end portion areas 24, 25 of the lower housing 22, wherein preferably an axially protruding lower end portion area 24 is constituted by an annular collar protruding axially and wherein preferably a radially protruding lower end portion area 25 is constituted by an annular collar protruding radially. Thus, the lower end portion areas 24, 25 of the lower housing 22 constitute an interface for connecting with the air treatment system.

Furthermore, the lower housing 22 serves as the support for the drying agent container 12. Hence, the lower housing 22 is supporting said drying agent container 12.

The drying agent cartridge 10 furthermore comprises a spring 26 supported directly or indirectly by the lower housing 22 and thus pressing against the lower housing 22 and furthermore pressing against the drying agent container 12 in order to press the lower housing 22 and the drying agent container 12 apart from each other. Thereby, the spring 26 generates a compression force on the drying agent 14.

The upper housing 18 is permanently connected with the lower housing 22 in a fixed position relative to each other. Preferably, an unopenable connection 27 between said upper housing 18 and the lower housing 22 is thus provided. This connection 27 is preferably provided by ultrasonic welding, hot riveting, electromagnetic welding or chemical bonding. Therefore, the upper housing 18 and the lower housing 22 are preferably made of synthetic material (plastic material).

The drying agent container 12 is axially movable in relation to the upper housing 18 and the lower housing 22. This movability is achieved by a guiding feature 28, e.g. a chamfer, that receives the upper end portion 20 of the drying agent container 12. This guiding feature 28 is adapted to guide the upper end portion 20 of the drying agent container 12.

The upper housing 18 closes the drying agent container 12 at its top end and ensures drying agent 14 compression and furthermore guides the movement of the drying agent container 12 in the axial direction.

The upper housing 18 comprises sockets 30 receiving arms 32 constituted within the lower housing 22. Preferably, these arms extend in a direction parallel to the center axis 34 of the drying agent cartridge 10. The respective upper end portions 35 of the arms 32 are inserted in the respective sockets 30. The connection of the upper end portions 35 of the arms 32 and the sockets 30 constitute the above-mentioned unopenable connection 27. The sockets 30 and arms 32 preferably have technological rounds and chamfers which facilitate assembly process.

Preferably, the drying agent container 12 comprises a circumferential rib 37 in order to provide the proper connection with the lower housing 22.

The drying agent container 12 preferably comprises an end-stop element 36 that is able to abut against the corresponding counterpart element 38 of the lower housing 22. The end-stop element 36 prevents that the drying agent container 12 clashes with the air treatment system.

Furthermore, the drying agent cartridge 10 preferably comprises a ring holder 40, preferably a fleece ring holder, that is abutted by the spring 26 against the lower housing 22 and that keeps a ring filter 42, preferably a fleece ring filter that is e.g. constituted as a foam filter, in a predetermined position.

The ring holder 40 is preferably provided with radial ribs 43 for improved rigidity of the ring holder 40.

Spacings between the arms 32 constitute lateral openings 44 or gaps within the lower housing 22.

The upper housing 18 comprises a mesh 46 with mesh openings 48 that are smaller than the size of the drying agent 14 elements, e.g. the desiccant beads 16.

The upper housing 18 comprises ribs 50 providing rigidity to the mesh 46. Furthermore, a top cover portion of the upper housing 18 is bulged downwards for improving its rigidity/stiffness. This constitution provides additional compression of the drying agent 14 or desiccant as well.

A fleece pad 52 is located at the bottom portion of the drying agent container 12. The fleece pad 52 secures glass-fibre pads 53 located at the bottom of the drying agent container 12 and avoids contact of the drying agent 14 with the glass-fibre pads 53.

Likewise, a further fleece pad 54 is provided at the top end portion of the drying agent container 12 in order to avoid contact of the drying agent 14 with the mesh 46 and possibly ribs 50 thus avoiding crumbled desiccant beads 16. Furthermore, fleece pad 54 also protects the drying agent 14 from escaping, e.g. as a result of vibrations and/or airflow during regeneration of the air dryer, in particular of the air drying cartridge 10, with an airflow coming from the bottom of the drying agent container 12 and being directed to the top of the drying agent container 12. This arrangement is particularly advantageous if the mesh openings 48 are larger than the size of the drying agent 14 elements, e.g. desiccant beads 16.

The lower housing 22 comprises a plurality of openings, hereinafter called lower housing openings 56 constituting an airflow entrance when being operated in a supply mode and an air flow exit when being operated in a regeneration mode; furthermore, the ring holder 40 comprises a plurality of openings, hereinafter called ring holder openings 58 being arranged vis-à-vis the lower housing openings 56.

The drying agent container 12 is furthermore provided with a central opening 60 constituting an air flow exit when being operated in a supply mode and an air flow entrance when being operated in a regeneration mode. The central opening 60 is constituted such that movement of the drying agent container 12 is allowed without leakage of air. Therefore, preferably the lower housing 22 as well as the outer contour of the drying agent container 12 are axially symmetric. For these reasons the entire drying agent cartridge 10 can be mounted in any axial position into the air treatment system (not shown).

Furthermore, the drying agent container 12 comprises radial ribs R1, R2 located at the horizontal interior wall of the drying agent container 12. These ribs contribute to stiffness and rigidity of the drying agent container 12. Furthermore, these ribs R1, R2 provide an improved air distribution and therefore improve the filtration capabilities of the drying agent cartridge 10.

Preferably, these ribs R1, R2 are arranged in two groups. The radial ribs R1 of the first group each start at an outer circumferential region of this horizontal interior wall and end in a region before the horizontal internal wall merges with the center opening 60. The radial ribs R2 of the second group each start at the outer circumferential region of the horizontal internal wall as well but merge together with each other within the region of the center axis 34. Thus, the radial ribs R1 of the first group are shorter than the radial ribs R2 of the second group.

The drying agent cartridge 10 is provided with a number of o-rings, preferably made of HNBR (Hydrogenated Nitrile Butadiene Rubber) material and lubricated by grease:
The first o-ring, namely a dynamic o-ring 62 is provided for sealing purposes between the drying agent container 12 and the lower housing 22, preferably in the area of the counterpart element 38.

One or two second o-rings, namely static o-rings 64 are provided in a circumferential groove 66 located at a circumference of the lower housing 22 for providing sealing function between the lower housing 22 and a removable cover (not shown) covering the drying agent cartridge 10.

A third o-ring, namely a static o-ring 68 is arranged at the lower end portion 24 of the lower housing 22 for sealing purposes between the lower housing 22 and the air treatment system (not shown).

A fourth o-ring, namely a static o-ring 69 is arranged at an outer lateral area of the lower end portion 24 of the lower housing 22 for sealing purposes between the lower housing 22 and the air treatment system (not shown).

During operation the above illustrated drying agent cartridge 10 is mounted on the air dryer of an air treatment system, preferably of a commercial vehicle, thereby being covered by the removable cover (not shown) covering, protecting, and sealing the air drying cartridge 10 against the environment.

Dirt air 70 is provided by the air treatment system and enters the drying agent cartridge 10 through lower housing openings 56 and passes through the ring filter 42. This ring filter 42 provides air cleaning function, in particular from solid particles.

This air leaves the ring filter 42 through the ring holder openings 58 and then flows through the lateral openings 44 between the arms 32 of the lower housing 22 and then flows inside the drying agent container 12 through the mesh openings 48 of the mesh 46 as being depicted by arrow 71.

Then, after passing the further fleece pad 54 the air flows through the drying agent 14, in particular the desiccant beads 16, providing air drying function, and then flows through the fleece pad 52 and glass-fibre pads 53 providing air cleaning function, in particular purifying the air from dust and oil. The fleece pad 52 particularly secures the drying agent 14 against the glass-fibre pads 53 in order to avoid crumbled desiccant beads 16 as thus the desiccant beads 16 will not get in touch with the glass-fibre pads 53. Hence, purification from moisture, oil, solid particles, and dust is performed.

As a result purified air 72 is ejected through the central opening 60 into the air treatment system (not shown).

### List of references (part of the description)

- 10: drying agent cartridge
- 12: drying agent container
- 14: drying agent
- 16: desiccant beads
- 18: upper housing
- 20: upper end portion of drying agent container
- 22: lower housing
- 24: axially protruding lower end portion area of lower housing
- 25: radially protruding lower end portion area of lower housing
- 26: spring
- 27: unopenable connection
- 28: guiding feature
- 30: sockets
- 32: arm
- 34: center axis
- 35: upper end portion of arm
- 36: end-stop element
- 37: circumferential rib
- 38: counterpart element
- 40: ring holder
- 42: ring filter
- 43: radial rib
- 44: lateral opening
- 46: mesh
- 48: mesh openings
- 50: rib
- 52: fleece pad
- 53: glass-fiber pads
- 54: further fleece pad
- 56: lower housing openings
- 58: ring holder openings
- 60: center opening
- 62: first, dynamic o-ring
- 64: second, static o-ring
- 66: circumferential groove
- 68: third, static o-ring
- 69: fourth, static o-ring
- 70: dirt air
- 71: arrow
- 72: purified air
- R1: rib of first group
- R2: rib of second group

## Claims

1. A drying agent cartridge for an air treatment system for a commercial vehicle, wherein a cover covers said drying agent cartridge (10) when being mounted on said air treatment system, comprising:
- a drying agent container (12) containing drying agent (14),
- an upper housing (18) being in contact with the upper end portion (20) of the drying agent container (12) and preventing drying agent (14) from escaping from drying agent container (12) ,
- a lower housing (22) for interfacing said drying agent cartridge (10) with said air treatment system and supporting said drying agent container (12) , and
- a spring (26) pressing against said lower housing (22) and generating a compression force on said drying agent (14) ,
**characterized in that**
- said upper housing (18) being permanently connected with said lower housing (22) in a fixed position relative to each other,
- said drying agent container (12) being axially movable in relation to the upper housing (18) and the lower housing (22) ,
- wherein said spring (26) presses the lower housing (22) and the drying agent container (12) apart from each other, wherein said upper housing (18) comprising sockets (30) and said lower housing (22) comprising arms (32) , wherein said sockets (30) receiving said arms (32) .

2. The drying agent container according to claim 1,
**characterized by**
an unopenable connection (27) between said upper housing (18) and said lower housing (22) .

3. The drying agent container according to claim 1 or 2,
**characterized in that**
said unopenable connection (27) is provided by ultrasonic welding, hot riveting, electromagnetic welding and/or chemical bonding.

4. The drying agent container according to any one of the preceding claims,
**characterized in that**
said upper housing (18) comprising a guiding features adapted to guide said drying agent container (12) .

5. The drying agent container according to any one of the preceding claims,
**characterized in that**
said drying agent container (12) comprises a circumferential rib (37).

6. The drying agent container according to any one of the preceding claims,
**characterized in that**
said drying agent container (12) comprises an end-stop element (36) being able to abut against a counterpart element (38) of said lower housing (22) .

7. The drying agent container according to any one of the preceding claims,
**characterized by**
a ring holder (40) being abutted by said spring (26) against said lower housing (22) and keeping a ring filter (42) in a predetermined position.

8. The drying agent container according to any one of the preceding claims,
**characterized in that**
said lower housing (22) comprises lateral openings (44) or gaps.

9. The drying agent container according to any one of the preceding claims,
**characterized in that**
said upper housing (18) comprises a mesh (46) with mesh openings (48) larger than the size of drying agent (14) elements, wherein a fleece pad (54) is located at the top end portion of the drying agent container (12).

10. The drying agent container according to claim 9,
**characterized in that**
said upper housing (18) comprises ribs (50) providing rigidity to said mesh (46) .

11. The drying agent container according to any one of the preceding claims,
**characterized by**
a fleece pad (52) located at the bottom portion of the drying agent container (12) .

12. The drying agent container according to claim 11,
**characterized by**
glass-fibre pads (53) located at the bottom of the drying agent container (12) and being secured by said fleece pad (52) .

13. The drying agent container according to any one of claims 7 to 12, **characterized by**
the ring filter (42) at the airflow entrance (57) of said drying agent cartridge (10) is constituted as a foam filter.

14. An air treatment system for a commercial vehicle, comprising:
- a drying agent cartridge (10) according to any one of claims 1 to 13, and
- a removable cover covering said drying agent cartridge (10) .

## Patentansprüche

1. Trockenmittelkartusche für ein Luftbehandlungssystem für ein Nutzfahrzeug, wobei die Trockenmittelkartusche (10) von einer Abdeckung abdeckt wird, wenn sie im Luftbehandlungssystem montiert ist, und Folgendes umfasst:
- einen Trockenmittelbehälter (12), der Trockenmittel (14) enthält,
- ein oberes Gehäuse (18), das mit dem oberen Endabschnitt (20) des Trockenmittelbehälters (12) in Kontakt ist und verhindert, dass Trockenmittel (14) aus dem Trockenmittelbehälter (12) entweicht,
- ein unteres Gehäuse (22) zum Koppeln der Trockenmittelkartusche (10) an das Luftbehandlungssystem und Stützen des Trockenmittelbehälters (12), und
- eine Feder (26), die gegen das untere Gehäuse (22) drückt und am Trockenmittel (14) eine Druckkraft erzeugt,
**dadurch gekennzeichnet, dass**
- das obere Gehäuse (18) mit dem unteren Gehäuse (22) relativ zueinander dauerhaft in einer festen Position verbunden ist,
- der Trockenmittelbehälter (12) bezogen auf das obere Gehäuse (18) und das untere Gehäuse (22) axial bewegbar ist,
- wobei die Feder (26) das untere Gehäuse (22) und den Trockenmittelbehälter (12) auseinanderdrückt, wobei das obere Gehäuse (18) Buchsen (30) umfasst und das untere Gehäuse (22) Arme (32) umfasst, wobei die Buchsen (30) die Arme (32) aufnehmen.

2. Trockenmittelbehälter nach Anspruch 1,
**gekennzeichnet durch**
eine nicht öffenbare Verbindung (27) zwischen dem oberen Gehäuse (18) und dem unteren Gehäuse (22).

3. Trockenmittelbehälter nach Anspruch 1 oder 2,
**dadurch gekennzeichnet, dass**
die nicht öffenbare Verbindung (27) durch Ultraschallschweißen, Heißnieten, elektromagnetisches Schweißen und/oder chemische Bindung bereitgestellt wird.

4. Trockenmittelbehälter nach einem der vorhergehenden Ansprüche,
**dadurch gekennzeichnet, dass**
das obere Gehäuse (18) ein Führungsmerkmale umfasst, die angepasst sind, den Trockenmittelbehälter (12) zu führen.

5. Trockenmittelbehälter nach einem der vorhergehenden Ansprüche,
**dadurch gekennzeichnet, dass**
der Trockenmittelbehälter (12) eine Umfangsrippe (37) umfasst.

6. Trockenmittelbehälter nach einem der vorhergehenden Ansprüche,
**dadurch gekennzeichnet, dass**
der Trockenmittelbehälter (12) ein Endanschlagelement (36) umfasst, das in der Lage ist, an ein Gegenelement (38) des unteren Gehäuses (22) gedrückt zu werden.

7. Trockenmittelbehälter nach einem der vorhergehenden Ansprüche,
**gekennzeichnet durch**
einen Ringhalter (40), der von der Feder (26) gegen das untere Gehäuse (22) gedrückt wird und ein Ringfilter (42) in einer vorbestimmten Position hält.

8. Trockenmittelbehälter nach einem der vorhergehenden Ansprüche,
**dadurch gekennzeichnet, dass**
das untere Gehäuse (22) seitliche Öffnungen (44) oder Spalte umfasst.

9. Trockenmittelbehälter nach einem der vorhergehenden Ansprüche,
**dadurch gekennzeichnet, dass**
das obere Gehäuse (18) ein Sieb (46) mit Sieböffnungen (48) umfasst, die größer sind als die Größe von Elementen des Trockenmittels (14), wobei sich am oberen Endabschnitt des Trockenmittelbehälters (12) eine Vliesmatte (54) befindet.

10. Trockenmittelbehälter nach Anspruch 9,
**dadurch gekennzeichnet, dass**
das obere Gehäuse (18) zum Bereitstellen von Steifigkeit für das Sieb (46) Rippen (50) umfasst.

11. Trockenmittelbehälter nach einem der vorhergehenden Ansprüche,
**gekennzeichnet durch**
eine Vliesmatte (52), die sich am Bodenabschnitt des Trockenmittelbehälters (12) befindet.

12. Trockenmittelbehälter nach Anspruch 11,
**gekennzeichnet durch**
Glasfasermatten (53), die sich am Boden des Trockenmittelbehälters (12) befinden und von der Vliesmatte (52) gesichert werden.

13. Trockenmittelbehälter nach einem der Ansprüche 7 bis 12,
**gekennzeichnet durch**
das Ringfilter (42), das am Luftstromeingang (57) der Trockenmittelkartusche (10) aus einem Schaumfilter besteht.

14. Luftbehandlungssystem für ein Nutzfahrzeug, das Folgendes umfasst:
- eine Trockenmittelkartusche (10) nach einem der Ansprüche 1 bis 13, und
- eine entfernbare Abdeckung, die die Trockenmittelkartusche (10) abdeckt.

## Revendications

1. Cartouche d'agent siccatif pour un système de traitement de l'air pour un véhicule utilitaire, dans laquelle un couvercle recouvre ladite cartouche d'agent siccatif (10) lorsqu'elle est montée sur ledit système de traitement d'air, comprenant :
- un contenant d'agent siccatif (12) contenant l'agent siccatif (14),
- un boîtier supérieur (18) étant en contact avec la partie d'extrémité supérieure (20) du contenant d'agent siccatif (12) et empêchant l'agent siccatif (14) de s'échapper du contenant d'agent siccatif (12),
- un boîtier inférieur (22) pour interfacer ladite cartouche d'agent siccatif (10) avec ledit système de traitement d'air et supportant ledit contenant d'agent siccatif (12), et
- un ressort (26) appuyant contre ledit boîtier inférieur (22) et générant une force de compression sur ledit agent siccatif (14),
**caractérisée en ce que**
- ledit boîtier supérieur (18) étant raccordé, de manière permanente, audit boîtier inférieur (22) dans une position fixe l'un par rapport à l'autre,
- ledit contenant d'agent siccatif (12) étant axialement mobile par rapport au boîtier supérieur (18) et au boîtier inférieur (22),
- dans laquelle ledit ressort (26) comprime le boîtier inférieur (22) et le contenant d'agent siccatif (12) à distance l'un de l'autre, dans laquelle ledit boîtier supérieur (18) comprenant des douilles (30) et ledit boîtier inférieur (22) comprenant des bras (32), dans laquelle lesdites douilles (30) reçoivent lesdits bras (32).

2. Contenant d'agent siccatif selon la revendication 1, **caractérisé par**
un raccordement impossible à ouvrir (27) entre ledit boîtier supérieur (18) et ledit boîtier inférieur (22).

3. Contenant d'agent siccatif selon la revendication 1 ou 2,
**caractérisé en ce que**
ledit raccordement impossible à ouvrir (27) est fourni par soudage par ultrasons, rivetage à chaud, soudage électromagnétique et/ou liaison chimique.

4. Contenant d'agent siccatif selon l'une quelconque des revendications précédentes,
**caractérisé en ce que**
ledit boîtier supérieur (18) comprend une caractéristique de guidage adaptée pour guider ledit contenant d'agent siccatif (12).

5. Contenant d'agent siccatif selon l'une quelconque des revendications précédentes,
**caractérisé en ce que**
ledit contenant d'agent siccatif (12) comprend une nervure circonférentielle (37).

6. Contenant d'agent siccatif selon l'une quelconque des revendications précédentes,
**caractérisé en ce que**
ledit contenant d'agent siccatif (12) comprend un élément de butée d'extrémité (36) pouvant venir en butée contre un élément antagoniste (38) dudit boîtier inférieur (22).

7. Contenant d'agent siccatif selon l'une quelconque des revendications précédentes,
**caractérisé par**
un support annulaire (40) qui est abouté par ledit ressort (26) contre ledit boîtier inférieur (22) et maintenant un filtre annulaire (42) dans une position prédéterminée.

8. Contenant d'agent siccatif selon l'une quelconque des revendications précédentes,
**caractérisé en ce que**
ledit boîtier inférieur (22) comprend des ouvertures latérales (44) ou espaces.

9. Contenant d'agent siccatif selon l'une quelconque des revendications précédentes,
**caractérisé en ce que**
ledit boîtier supérieur (18) comprend une maille (46) avec des ouvertures de maille (48) supérieures à la taille des éléments d'agent siccatif (14), dans lequel un tampon de molleton (54) est positionné au niveau de la partie d'extrémité supérieure du contenant d'agent siccatif (12).

10. Contenant d'agent siccatif selon la revendication 9, **caractérisé en ce que**
ledit boîtier supérieur (18) comprend des nervures (50) fournissant la rigidité à ladite maille (46).

11. Contenant d'agent siccatif selon l'une quelconque des revendications précédentes,
**caractérisé par**
un tampon de molleton (52) positionné au niveau de la partie inférieure du contenant d'agent siccatif (12).

12. Contenant d'agent siccatif selon la revendication 11, **caractérisé par**
des tampons en fibres de verre (53) positionnés au fond du contenant d'agent siccatif (12) et étant fixés par ledit tampon de molleton (52).

13. Contenant d'agent siccatif selon l'une quelconque des revendications 7 à 12,
**caractérisé par**
le filtre annulaire (42) au niveau de l'entrée d'écoulement d'air (57) de ladite cartouche d'agent siccatif (10) est constitué comme un filtre en mousse.

14. Système de traitement d'air pour un véhicule utilitaire, comprenant :
- une cartouche d'agent siccatif (10) selon l'une quelconque des revendications 1 à 13, et
- un couvercle amovible recouvrant ladite cartouche d'agent siccatif (10).
